# EUROPEAN PATENT APPLICATION

(11) **EP 1 958 812 A1**
(43) Date of publication of application: **20.08.2008**
(21) Application number: 07102411.1
(22) Date of filing: 14.02.2007
(51) Int. Cl.: B60K 20/02, F16H 59/02

(54) **Knob-Type car gear shifting device**

(71) Applicant: China Engine Corporation, Taoyuan Hsien (TW)
(72) Inventor: Fan, Shao-Chin, Pingtung County (TW); Hsu, Szu-Chieh, Taoyuan County (TW)
(74) Representative: Blasberg, Tilo

(57) **Abstract**

A knob-type car gear shifting device for driving a gear shifting mechanism inside a car includes a base (10) and a knob (20) capable of turning relative to the base (10), wherein the knob (20) and the base (10), corresponding to the turning route, have a positioning unit (30) and plural limiting portions (11), which respectively form a locating relationship with the positioning unit (30); and two connecting cables (40), whose one ends are connected to the knob (20) and the other ends are connected to the gear shifting mechanism, for being driven by the knob (20) passing the turning route so as to drive the gear shifting mechanism. Thereby, the gear shifting device can be the knob type replacing the conventional shaft style and can be applied to cars, such as ATV (All Terrain Vehicle) and dune buggy, for effectively preventing the gear shaft from hitting the user, and further, the knob-type gear shifting device can be integrated with the car modeling more and is more convenient for gear changing and easier in operation.

## Description

### FIELD OF THE INVENTION

The present invention is related to a car gear shifting device, and more particularly to a knob-type gear shifting device.

### BACKGROUND OF THE INVENTION

When the dune buggy moves forward or backward, or stops (neutral gear), the control thereof is depending on the gear lever, and moving the gear lever will drive the gear shaft to move so as to control the forward or backward movement of the car.

Please refer to R.O.C. patent No. 1253997 which discloses the linking between a conventional gear lever and a gear shaft, wherein the linking is achieved by a connecting rod including:
a U-shaped board, whose one end with the gear lever are fixedly pivoted on an axle, so that the U-shaped board and the gear lever are jointly pivoted on the axle.
a medium shaft, whose one end is pivoted on the other end of the U-shaped board and whose the other end is downwardly extended.
a crank, whose one end is pivoted on the downwardly extended end of the medium shaft and whose the other end is fixedly connected to the gear shaft.

After the components described above are assembled, when operation, the gear can be positioned at the neutral gear. When moving forward, the gear lever is moved forward and the U-shaped board, the medium shaft and the crank are moved forward together with the gear lever, so that the crank can synchronously drive the gear shaft to forwardly move an angle so as to drive a forward gear shifting inside the engine.

When moving backward, the gear lever is moved backward and the U-shaped board, the medium shaft and the crank together with the gear lever are moved backward, so that the crank can synchronously drive the gear shaft to backwardly move an angle so as to drive a backward gear shifting.

As described above, the conventional gear lever and the gear shaft are connected by the connecting rod, so that the cost thereof is quite high since the connecting rod is assembled by the U-shaped board, the medium shaft and the crank. Moreover, all the components of the connecting rod are disposed in the narrow space outside the engine, so that it is inconvenient, and if it is disposed in a jolty car, such as dune buggy, the user might be hit by the gear lever and get hurt. Therefore, a significant improvement is required.

### SUMMARY OF THE INVENTION

The object of the present invention is to provide a knob-type gear shifting device for replacing the conventional gear lever, so that it can be applied to cars, such as ATV (All Terrain Vehicle) or dune buggy, for effectively preventing the gear shaft from hitting the user, and further, the knob-type gear shifting device can be integrated with the car modeling and is more convenient and easier in gear changing and operation.

For achieving the purposes described above, the present invention discloses a knob-type car gear shifting device includes: a base and a knob capable of turning relative to the base, wherein the knob and the base, corresponding to the turning route, have a positioning unit and plural limiting portions, which respectively form a locating relationship with the positioning unit; and two connecting cables, whose one ends are connected to the knob and the other ends are connected to the gear shifting mechanism, for being driven by the knob passing the turning route so as to drive the gear shifting mechanism. Through the two connecting cables respectively aside the knob, the gear shifting mechanism can be pulled to the different positions as the user clockwise or counterclockwise turns the knob, so that the purpose of shifting up and down can be achieved.

### BRIEF DESCRIPTION OF THE DRAWINGS

The foregoing aspects and many of the attendant advantages of this invention will be more readily appreciated as the same becomes better understood by reference to the following detailed description, when taken in conjunction with the accompanying drawings, wherein:
Fig. 1 is a structural drawing showing a preferred embodiment according to the present invention;
Fig. 2 is a structural drawing showing a preferred embodiment according to the present invention; and
Fig. 3 is a partial sectional view showing a preferred embodiment according to the present invention.

### DESCRIPTION OF THE PREFERRED EMBODIMENT

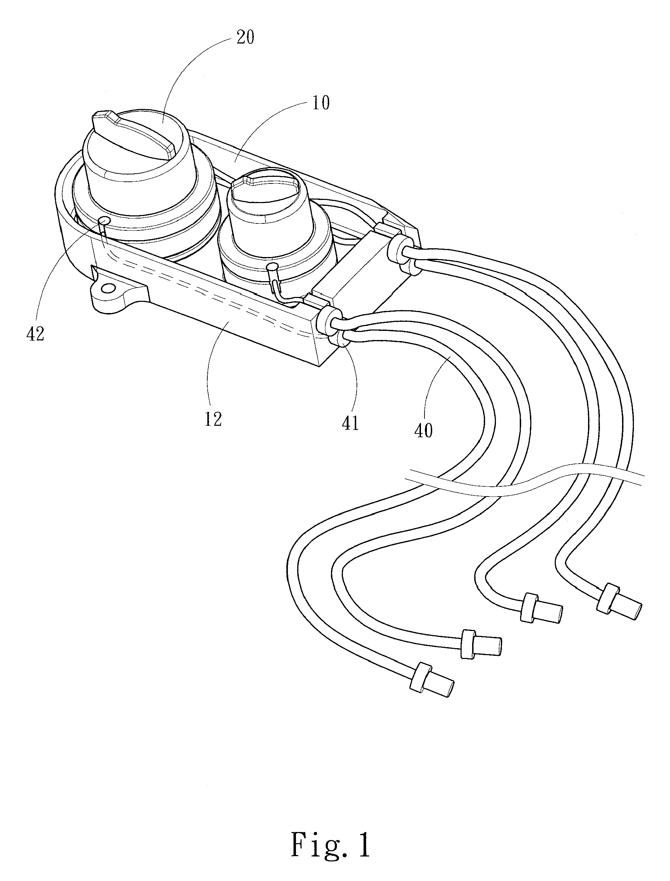

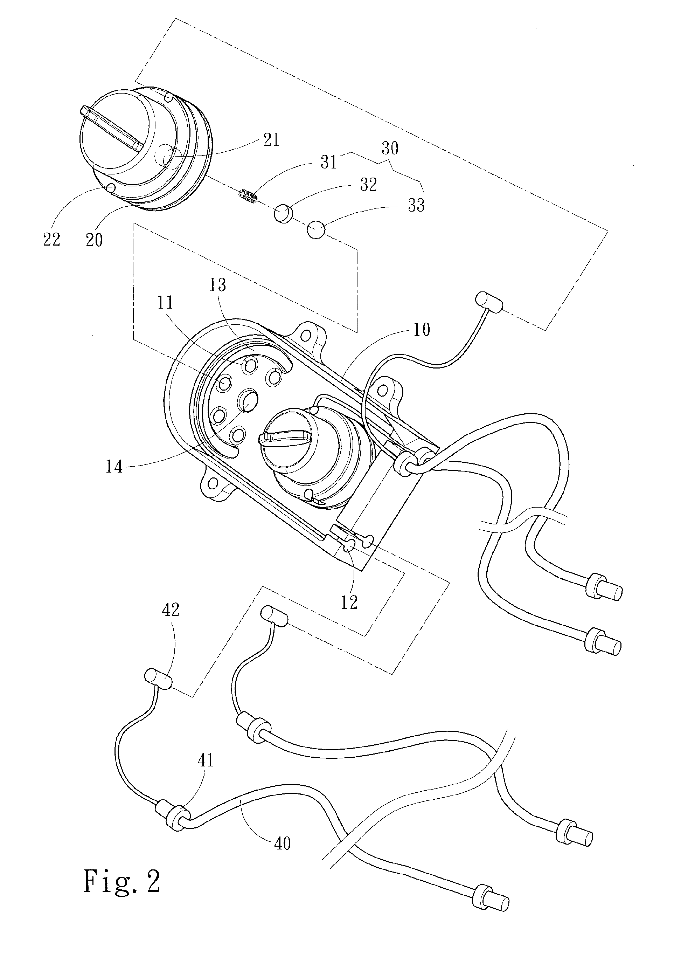

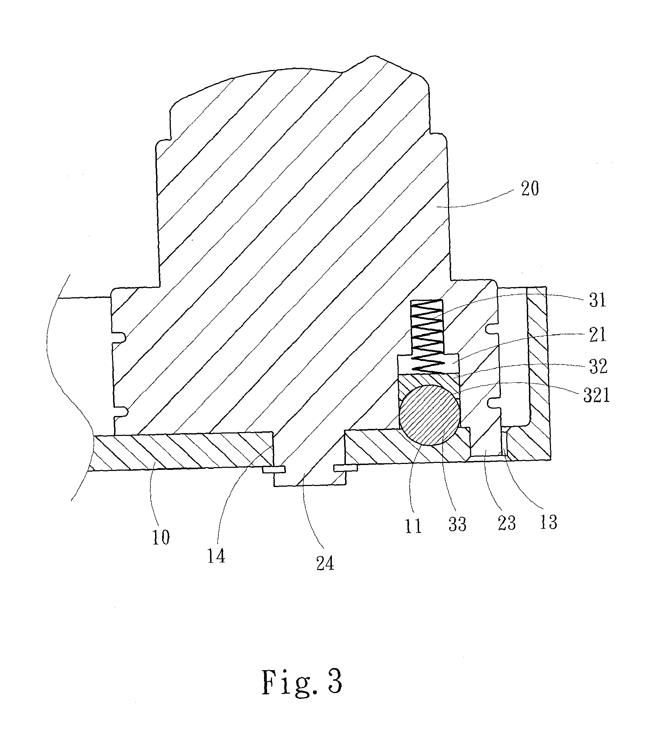

Please refer to Fig. 1 and Fig. 2 which shows the structure of a preferred embodiment according to the present invention. As shown, a knob-type car gear shifting device for driving a gear shifting mechanism inside the car includes: a base 10 and a knob 20, which is mounted on the base 10 and having a turning route relative to base 10, wherein the base 10 has a guiding groove 13 mounted or formed thereon corresponding to the turning route for guiding the knob 20, and the knob 20 has a protrusion 23 (as shown in Fig. 3) located thereunder which can be moved in the guiding groove 13. It is possible to provide more than one knob 20. As shown in this embodiment, there are two knobs 20 simultaneously located on the base 10 for respectively controlling the forward gear, neutral gear and backward gear of the gear shifting mechanism. Besides, corresponding to the turning route, the knob 20 and the base 10 have a positioning unit 30 and plural limiting portions 11, which can respectively form a locating relationship with the positioning unit 30. In this embodiment, plural limiting portions 11 are depressed troughs mounted or formed on the base 10 along a circle. In addition, there are connecting cables 40 connected to the two sides of the knob 20, wherein a through hole 12 is mounted or formed on the base 10 for passing through the connecting cable 40, and the connecting cable 40 has a blocking portion 41 to be positioned at the through hole 12. Further, the other ends of the two connecting cables 40 are connected to the gear shifting mechanism, and thus, the two connecting cables 40 can be driven by the knob 20 passing the turning route so as to drive or actuate the gear shifting mechanism. Through the two connecting cables 40 aside the knob 20, the gear shifting mechanism can be pulled to the different positions as the user turns the knob 20 clockwise or counterclockwise, so that the purpose of shifting up and down can be achieved. Furthermore, for connecting the connecting cables 40 to the knob 20, the side wall of the knob 20 has a set of assembling troughs 22 and the connecting cables 40, at the end portions thereof, respectively have a fixing portion 42 for fixedly connecting to the assembling troughs 22.

At the bottom of the knob 20, a position-limiting trough 21 is mounted for accommodating the positioning unit 30, wherein the positioning unit 30 includes a spring 31 disposed in the position-limiting trough 21, a holding piece 32 connected to the spring 31 and having an indentation 321 at the other end (as shown in Fig. 3), and a ball 33 located between the indentation 321 and the limiting portions 11 for forming the locating relationship. In this embodiment, although the positioning unit 30 is disposed at the bottom of the knob 20 and the base 10 correspondingly has the limiting portions 11 mounted thereon, the setting of the positioning unit 30 and the limiting portions 11 is interchangeable, that is, the limiting portions 11 are disposed at the bottom of the knob 20 and the base 10 has the positioning unit 30.

At the central of the bottom of the knob 20, a central shaft 24 is mounted, and correspondingly, the base 10 has an opening 14 for penetrating the central shaft 24. Therefore, when the user turns the knob 20, the knob 20 and the base 10 will be moved in opposite directions, and during turning, the ball 33 of the positioning unit 30 will fall into the limiting portions 11 on the base 10. Then, through the spring 31 rejecting the holding piece 32 and the ball 33, an obvious feeling by hand can be provided to the user, i.e. a sensory feedback, when the positioning unit 30 is located in any limiting portion 11, so that the user can clearly understand or feel the change of gear. In the aforesaid, the knob-type car gear shifting device provided in the present invention is particularly suited for the cars, such as ATV (All Terrain Vehicle) and dune buggy, so as to effectively prevent the gear shaft from hitting the user, and further, the knob-type gear shifting device can be integrated with the car modeling more and is more convenient for gear changing and easier in operation.

It is to be understood, however, that even though numerous characteristics and advantages of the present invention have been set forth in the foregoing description, together with details of the structure and function of the invention, the disclosure is illustrative only, and changes may be made in detail, especially in matters of shape, size, and arrangement of parts within the principles of the invention to the full extent indicated by the broad general meaning of the terms in which the appended claims are expressed.

## Claims

1. A knob-type car gear shifting device for driving a gear shifting mechanism inside a car, comprising:
a base (10);
a knob (20), mounted or formed on the base (10) and having a turning route relative to base (10), wherein the knob (20) and the base (10), in correspondence with the turning route, have a positioning unit (30) and plural limiting portions (11), which respectively form a locating relationship with the positioning unit (30); and
two connecting cables (40), whose one ends are connected to the knob (20) and the other ends are connected to the gear shifting mechanism, for being driven by the knob (20) passing the turning route so as to drive the gear shifting mechanism.

2. The knob-type car gear shifting device as claimed in claim 1, wherein the plural limiting portions (11) are depressed troughs mounted or formed on the base (10) along a circle.

3. The knob-type car gear shifting device as claimed in claim 1 or 2, wherein the knob (20) has a position-limiting trough (21) mounted or formed at the bottom thereof for accommodating the positioning unit (30), and wherein the positioning unit (30) includes a spring (31) disposed in the position-limiting trough (21), a holding piece (32) connected to the spring (31) and having an indentation (321) at the other end, and a ball (33) located between the indentation (321) and the limiting portions (11) for forming the locating relationship.

4. The knob-type car gear shifting device as claimed in any of the preceding claims, wherein the knob (20) has the positioning unit (30) disposed at the bottom thereof and the base (10) correspondingly has the limiting portions (11) mounted or formed thereon, and the setting of the positioning unit (30) and the limiting portions (11) is interchangeable.

5. The knob-type car gear shifting device as claimed in any of the preceding claims, wherein the base (10) has a guiding groove (13) mounted or formed thereon corresponding to the turning route of the knob (20), and the knob (20) has a protrusion (23) located thereunder for moving in the guiding groove (13).

6. The knob-type car gear shifting device as claimed in any of the preceding claims, wherein the knob (20) has a central shaft (24) mounted or formed at the central of the bottom thereof, and correspondingly, the base (10) has an opening (14) for penetrating the central shaft (24).

7. The knob-type car gear shifting device as claimed in any of the preceding claims, wherein the base (10) has a through hole (12) mounted or formed thereon for passing through the connecting cable (40), and the connecting cable (40) has a blocking portion (41) for positioning at the through hole (12).

8. The knob-type car gear shifting device as claimed in any of the preceding claims, wherein the side wall of the knob (20) has a set of assembling troughs (22) and the connecting cables (40), at the end portions thereof, respectively have a fixing portion (42) for fixedly connecting to the assembling troughs (22).

## Amended claims

### Amended claims in accordance with Rule 137(2) EPC.

**1.** A knob-type car gear shifting device for driving a gear shifting mechanism inside a car, comprising:
a base (10);
a knob (20), which is rotatable about a central shaft (24), is mounted or formed on the base (10) and has a turning route relative to base (10), wherein the knob (20) and the base (10), in correspondence with the turning route, have a positioning unit (30) and a plurality of limiting portions (11), which respectively form a locating relationship with the positioning unit (30);
**characterized in that** two connecting cables (40) are provided, whose one ends are connected to the knob (20) and the other ends arc connected to the gear shifting mechanism, for being driven by the knob (20) passing the turning route so as to drive the gear shifting mechanism, wherein
the positioning unit (30) is disposed at a bottom of said knob (20) or an opposite surface of said base (10) and
the plurality of limiting portions (11) are depressed troughs mounted or formed on said opposite surface of said base (10) or on said bottom of said knob (20) along a circle, and wherein
a position-limiting trough (21) is mounted or fonned at said bottom of said knob (20) or an said opposite surface of said base (10) for accommodating the positioning unit (30), said positioning unit (30) comprising a spring (31) disposed in the position-limiting trough (21), a holding piece (32) connected to the spring (31) and having an indentation (321) at the other end, and a ball (33) located between the indentation (321) and the limiting portions (11) for forming the locating relationship

**2.** The knob-type car gear shifting device as claimed in claim 1, wherein the base (10) has a guiding groove (13) mounted or formed thereon corresponding to the turning route of the knob (20), and the knob (20) has a protrusion (23) disposed at a bottom thereof engaging with said guiding groove (13).

**3.** The knob-type car gear shifting device as claimed in any of the preceding claims, wherein said central shaft (24) is mounted or formed at a center of the bottom of said knob (20), and wherein correspondingly an opening (14) is disposed in said base (10) for accommodating said central shaft (24).

**4.** The knob-type car gear shifting device as claimed in any of the preceding claims, wherein the base (10) has a through hole (12) mounted or formed thereon for passing through the connecting cable (40), and the connecting cable (40) has a blocking portion (41) for positioning at the through hole (12).

**5.** The knob-type car gear shifting device as claimed in any of the preceding claims, wherein the side wall of the knob (20) has a set of assembling troughs (22) and the connecting cables (40), at the end portions thereof, respectively have a fixing portion (42) for fixedly connecting to the assembling troughs (22).
